# EUROPÄISCHE PATENTSCHRIFT

(11) **EP 1 129 878 B1**
(45) Veröffentlichungstag und Bekanntmachung des Hinweises auf die Patenterteilung: **28.04.2004**
(21) Anmeldenummer: 01104865.9
(22) Anmeldetag: 28.02.2001
(51) Int. Cl.: B60J 5/04

(54) **Türe oder sonstiges Karossererieteil eines Kraftfahrzeuges**
Door or analogous body part of a motor vehicle
Porte ou partie analogue de carosserie d'une voiture automobile

(30) Priorität: 02.03.2000 DE 10010084; 21.03.2000 DE 10013868
(43) Veröffentlichungstag der Anmeldung: 05.09.2001
(73) Patentinhaber: DURA Automotive Plettenberg Entwicklungs- und Vertriebs GmbH, 58840 Plettenberg (DE)
(72) Erfinder: Heuel, Gerhard, 57482 Wenden (DE)
(74) Vertreter: Zinnecker, Armin, Dipl.-Ing.

(56) Entgegenhaltungen:
- EP-A- 0 336 565
- EP-A- 0 427 153
- DE-A- 4 331 616
- DE-A- 4 408 287
- DE-A- 19 737 160

## Beschreibung

Die Erfindung betrifft das Montageverfahren einer Türe oder eines sonstigen Karosserieteiles eines Kraftfahrzeugs nach dem Oberbegriff des Anspruchs 1, sowie die entsprechende Türe oder das sonstige karosserieteil.

Die Türen und sonstigen Karosserieteile eines Kraftfahrzeugs umfassen üblicherweise ein Innenblech und eine daran befestigte Außenhaut. Die Außenhaut und das Innenblech müssen lackiert werden. Nach einem vorbekannten Verfahren wird die Außenhaut durch eine Umbördelung an dem Innenblech befestigt und in die Karosserie zur anschließenden Lackierung eingebaut. Erst danach werden die weiteren Funktionselemente in der Türe oder in dem sonstigen Karosserieteil angebracht. Bei der Montage dieser Funktionselemente muß dann darauf geachtet werden, daß die bereits lackierte Außenhaut nicht beschädigt wird. Die Montage muß also besonders sorgfältig durchgeführt werden. Gleichwohl kann es vorkommen, daß die lackierte Außenhaut bei der Montage beschädigt wird.

Aus der DE 44 08 287 A1 ist eine Fahrzeugtüranordnung bekannt, die eine Innenhaut und eine Außenhaut aufweist, wobei die Außenhaut lösbar mit der Innenhaut verbunden ist. Die Innenhaut besitzt eine Bodenkante. Die Außenhaut besitzt eine Bodenkante und einen Flansch, der sich mindestens entlang der Bodenkante der Außenhaut erstreckt und der zu der Innenhaut hin gefaltet ist, um eine sich nach oben erstreckende, im wesentlichen V-förmige Ausnehmung zu bilden, innerhalb der die Bodenkante der Innenhaut lösbar in Eingriff steht. Aufgabe der Erfindung ist es, eine verbessertes Montageverfahren für eine Türe oder ein sonstiges Karosserieteil eines Kraftfahrzeugs vorzuschlagen.

Erfindungsgemäß wird diese Aufgabe durch die Merkmale des Anspruchs 1 gelöst. Die Türe oder das sonstige Karosserieteil des Kraftfahrzeugs umfaßt ein Innenblech und eine lackierte Außenhaut. Die Außenhaut ist durch Stanzniete oder andere Befestigungselemente an dem Innenblech befestigt. Die lackierte Außenhaut wird erst am Ende des Montagevorganges der Türe oder des sonstigen Karosserieteiles am Innenblech befestigt. Hierdurch wird es ermöglicht, die lackierte Außenhaut erst dann an dem Innenblech zu befestigen, wenn die weiteren Funktionselemente bereits in der Türe oder in dem sonstigen Karosserieteil montiert worden sind. Die Montage der Funktionselemente kann einfacher und schneller erfolgen. Insbesondere muß bei der Montage der Funktionselemente nicht mehr auf die empfindliche lackierte Außenhaut geachtet werden. Diese Außenhaut kann während der Montage der Funktionselemente auch nicht beschädigt werden, da sie erst zuletzt montiert wird. Ein weiterer Vorteil besteht darin, daß die Außenhaut bei Bedarf auch demontiert werden kann. Hierin liegt insbesondere ein Service-Vorteil.

Zur Befestigung der Außenhaut an dem Innenblech sind alle Befestigungselemente geeignet, die eine Befestigung am Ende des Montagevorgangs gestatten. Besonders vorteilhaft sind Befestigungselemente. In der Praxis haben sich Stanzniete besonders bewährt.

Vorteilhafte Weiterbildungen sind in den Unteransprüchen beschrieben.

Vorteilhaft ist es, wenn das Innenblech in einem Endbereich eine Abkantung aufweist. Die Abkantungen können dabei jeweils in einem rechten Winkel verlaufen. Es ist aber auch möglich, daß die Abkantungen einen größeren Winkel von beispielsweise 135° aufweisen. Durch eine Abkantung, die auch als Abkröpfung bezeichnet werden kann, kann erreicht werden, daß die Außenhaut und das Innenblech in der Mitte der Türe oder des sonstigen Karosserieteils in einem Abstand voneinander verlaufen und daß sie in ihrem Randbereich dann miteinander verbunden werden können. Ferner kann dadurch die Stabilität im Randbereich erhöht werden. Schließlich ist es auch möglich, eine Überdeckung im Scharnierbereich (unter dem Kotflügel) bzw. im Bereich der Drehachse einer Türe zu erreichen.

Eine weitere vorteilhafte Weiterbildung ist dadurch gekennzeichnet, daß die Außenhaut in einem Endbereich eine Abkantung oder Abkröpfung aufweist.

Eine weitere vorteilhafte Weiterbildung ist dadurch gekennzeichnet, daß die Außenhaut das Innenblech überragt und abgekantet ist. Hierbei kann der das Innenblech überragende Bereich abgekantet sein, wobei dieser Bereich vorzugsweise nach innen abgekantet ist. Hierdurch wird eine Abrundung der Außenhaut in ihrem Endbereich erreicht. Die Abkantung kann einen beliebigen Winkel umfassen, beispielsweise 90° oder 180°, wobei allerdings auch andere Abkant-Winkel möglich sind.

Vorzugsweise ist zwischen dem Innenblech und der Außenhaut eine Dichtung vorgesehen.

Die Erfindung betrifft ferner ein Kraftfahrzeug, das eine erfindungsgemäße Türe und/oder ein erfindungsgemäßes sonstiges Karosserieteil umfaßt.

Ausführungsbeispiele der Erfindung werden nachstehend anhand der beigefügten Zeichnung im einzelnen erläutert. In der Zeichnung zeigt
- Fig. 1: eine Kraftfahrzeugtüre in einer Seitenansicht,
- Fig. 2: einen Schnitt längs der Linie A-A in Fig. 1,
- Fig. 3: eine vergrößerte Darstellung der Einzelheit X in Fig. 2,
- Fig. 4: einen Schnitt längs der Linie B-B in Fig. 1 und
- Fig. 5: einen Schnitt längs der Linie C-C in Fig. 1.

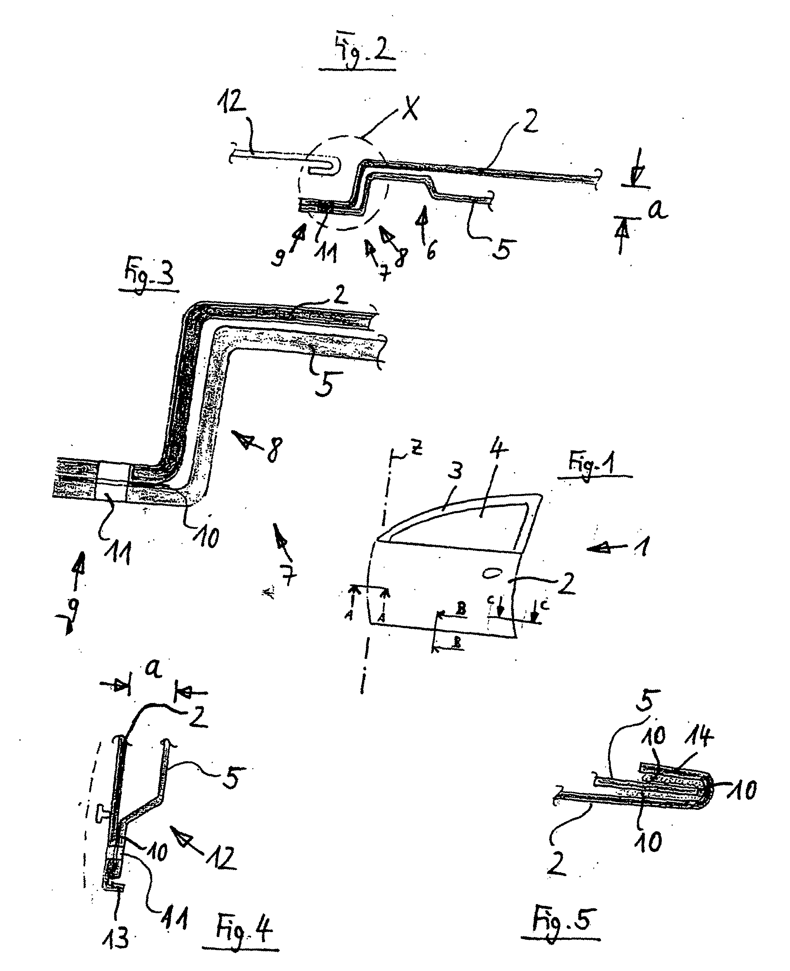

Die in Fig. 1 gezeigte Kraftfahrzeugtüre 1 umfaßt eine lackierte Außenhaut 2, ein Innenblech 5 (in der Fig. 1 nicht sichtbar, da von der Außenhaut 2 abgedeckt), einen Rahmen 3 und eine Scheibe 4. Die Kraftfahrzeugtüre 1 ist um die vertikale Achse Z schwenkbar.

Im Mittenbereich der Kraftfahrzeugtüre verlaufen die lackierte Außenhaut 2 und das Innenblech 5 in der aus Fig. 2 ersichtlichen Weise parallel zueinander und im Abstand a voneinander. Der Abstand zwischen der lackierten Außenhaut 2 und dem Innenblech 5 wird im Endbereich der Kraftfahrzeugtüre durch die Abkantung 6 des Innenblechs 5 vermindert.

Weiter außerhalb von der Abkantung 6 (also in der Darstellung der Fig. 2 und 3 weiter links) befindet sich eine weitere Abkantung 7 der lackierten Außenhaut 2 und des Innenblechs 5. Die lackierte Außenhaut 2 und das Innenblech 5 weisen hier jeweils zwei gegensinnige Abkantungen um jeweils 90° oder größer auf. Die Abkantungen sind dabei derart ausgebildet, daß der - nur noch geringe - Abstand zwischen der lackierten Außenhaut 2 und dem Innenblech 5 in den abgekröpften Schenkeln 8 zunächst gleichbleibt und dann in den Endschenkeln 9 etwas geringer wird. Im Bereich der Endschenkel 9 ist zwischen der lackierten Außenhaut 2 und dem Innenblech 5 eine Dichtung 10 vorgesehen. Femer wird die lackierte Außenhaut 2 in diesem Bereich mit dem Innenblech 5 durch einen Stanzniet 11 verbunden, wobei über die Länge des äußeren Randes der lackierten Außenhaut 2 und des Innenblechs 5 mehrere Stanzniete vorhanden sind.

Die Schwenkachse Z [Großlauchstabe] der Kraftfahrzeugtüre befindet sich in dem in Fig. 2 mit X bezeichneten Bereich, wo die Scharniere der Tür befestigt sind. Dort schließt sich an die lackierte Außenhaut 2 ein weiteres äußeres Karosserieteil (Kotflügel)12 an, das mit der lackierten Außenhaut 2 fluchtet und dessen der lackierten Außenhaut 2 zugewandtes Ende um 180° abgekantet ist. Die Endschenkel 9 liegen in der aus Fig. 2 ersichtlichen Weise unterhalb des Endes des Karosserieteils 12 (Kotflügel).

Die untere Kante der Kraftfahrzeugtüre 1 ist wie in Fig. 4 dargestellt ausgebildet. Auch hier wird der im Mittenbereich der Kraftfahrzeugtüre vorhandene Abstand a durch eine Abkantung 12 des Innenblechs reduziert, wobei die Abkantung 12 im wesentlichen der Abkantung 6 entspricht. Die Außenhaut 2 überragt das Innenblech 5. Ihr das Innenblech 5 überragendes Ende 13 ist um 90° nach innen abgekantet. Die lackierte Außenhaut 2 und das Innenblech 5 sind in ihrem Endbereich durch Stanzniete 11 miteinander verbunden. In diesem Bereich ist femer ein Dichtung 10 zwischen der lackierten Außenhaut 2 und dem Innenblech 5 vorgesehen.

Die Ausbildung der hinteren vertikalen Kante der Kraftfahrzeugtüre 1 ist in Fig. 5 gezeigt. Auch hier überragt die Außenhaut 2 das Innenblech 5. Das das Innenblech 5 überragende Ende 14 der Außenhaut 2 ist um ca. 180° oder kleiner um das Ende des Innenblechs 5 herum abgekantet. Zwischen Innenblech 5 und Außenhaut 2 ist eine das Ende des Innenblechs 5 auf beiden Seiten oder auf einer Seite umgebende Dichtung 10 vorgesehen.

Durch die Erfindung wird eine Kraftfahrzeugtüre oder ein sonstiges Karosserieteil eines Kraftfahrzeugs geschaffen, das eine Montage der lackierten Außenhaut ohne Bördeln ermöglicht. Es wird eine einfache Montage durch Stanznieten durchgeführt. Alle Funktionselemente sind einfach zugänglich und können einfach montiert werden. Die Außenhaut kann zuletzt montiert werden. Ferner ist eine Demontage der Außenhaut möglich (Service-Vorteil). Es wird eine Unabhängigkeit von der Online-Lackierung geschaffen. Die Erfindung ist auf kostengünstige Weise realisierbar.

## Patentansprüche

1. Verfahren zum Montieren einer Türe oder eines sonstigen Karosserieteiles eines Kraftfahrzeugs mit einem Innenblech (5) und einer daran befestigten, lackierten Außenhaut (2), die an dem Innenblech (5) durch Stanzniete (11) oder andere Befestigungselemente befestigt ist,
**dadurch gekennzeichnet,**
**dass** die lackierte Außenhaut (2) erst am Ende des Montagevorganges der Türe oder des sonstigen Karosserieteiles am Innenblech (5) befestigt wird.

2. Türe oder sonstiges Karosserieteil zum Montieren gemäß dem Vefahren nach Anspruch 1, **dadurch gekennzeichnet, daß** das Innenblech (5) in einem Endbereich eine Abkantung (6, 12) aufweist.

3. Türe oder sonstiges Karosserieteil nach Anspruch 2, **dadurch gekennzeichnet, daß** die Außenhaut (2) in einem Endbereich eine Abkantung (8) aufweist.

4. Türe oder sonstiges Karosserieteil nach einem der Ansprüche 2 oder 3, **dadurch gekennzeichnet, daß** die Außenhaut (2) das Innenblech (5) überragt und abgekantet (13, 14) ist.

5. Türe oder sonstiges Karosserieteil nach einem der Ansprüche 2 bis 4, **dadurch gekennzeichnet, daß** zwischen Innenblech (5) und Außenhaut (2) eine Dichtung (10) vorgesehen ist.

6. Kraftfahrzeug, **gekennzeichnet durch** eine Türe oder ein sonstiges Karosserieteil nach einem der Ansprüche 2 bis 5.

## Claims

1. Method for fitting a door or another body part of a motor vehicle having an inner panel (5) and a painted outer skin (2) fastened thereto, the said outer skin being fastened to the inner panel (5) by punched rivets (11) or other fastening means, **characterized in that** the painted outer skin (2) is fastened to the inner panel (5) only at the end of the process of installing the door or the other body part.

2. Door or other body part for fitting in accordance with the method according to Claim 1, **characterized in that** the inner panel (5) has a bend (6, 12) in the end region.

3. Door or other body part according to Claim 2, **characterized in that** the outer skin (2) has a bend (8) in an end region.

4. Door or other body part according to either of Claims 2 and 3, **characterized in that** the outer skin (2) protrudes over the inner panel (5) and is bent (13, 14).

5. Door or other body part according to one of Claims 2 to 4, **characterized in that** a seal (10) is provided between the inner panel (5) and outer skin (2).

6. Motor vehicle, **characterized by** a door or other body part according to one of Claims 2 to 5.

## Revendications

1. Procédé de montage d'une porte ou d'une partie de carrosserie analogue d'un véhicule automobile, avec une tôle intérieure (5) et une peau extérieure laquée (2) fixée à celle-ci, qui est fixée à la tôle intérieure (5) par des rivets de poinçonnage (11) ou d'autres éléments de fixation, **caractérisé en ce que** la peau extérieure laquée (2) est fixée seulement à la fin de l'opération de montage de la porte ou de la partie de carrosserie analogue à la tôle intérieure (5).

2. Porte ou partie de carrosserie analogue pour le montage selon le procédé conformément à la revendication 1, **caractérisée en ce que** la tôle intérieure (5) présente dans une zone d'extrémité un pliage (6,12).

3. Porte ou partie de carrosserie analogue selon la revendication 2, **caractérisée en ce que** la peau extérieure (2) présente dans une zone d'extrémité un pliage (8).

4. Porte ou partie de carrosserie analogue selon l'une des revendications 2 ou 3, **caractérisée en ce que** la peau extérieure (2) fait saillie sur la tôle intérieure (5) et est repliée (13,14).

5. Porte ou partie de carrosserie analogue selon l'une des revendications 2 à 4, **caractérisée en ce qu'**il est prévu entre la tôle intérieure (5) et la peau extérieure (2) une garniture d'étanchéité (10).

6. Véhicule automobile, **caractérisé par** une porte ou une partie de carrosserie analogue selon l'une des revendications 2 à 5.
